# EUROPEAN PATENT SPECIFICATION

(11) **EP 2 610 046 B1**
(45) Date of publication and mention of the grant of the patent: **21.06.2017**
(21) Application number: 12199733.2
(22) Date of filing: 28.12.2012
(51) Int. Cl.: B29C 65/48, B29C 65/50, B29C 59/02, F16B 11/00

(54) **Method for joining components through mechanical adhesion and mechanical adhesion joint for joining components**
Verfahren zum Verbinden von Komponenten durch mechanische Haftung, und mechanische Haftungsverbindung zum Verbinden von Komponenten
Procédé d'assemblage de composants par adhérence mécanique et joint d'adhérence mécanique servant à assembler des composants

(30) Priority: 28.12.2011 BR 11053437
(43) Date of publication of application: 03.07.2013
(73) Proprietor: Embraer S.A., 12227-901 São José Dos Campos SP (BR)
(72) Inventor: Victorazzo, Danilo Seixas, 12227-901 São José Dos Campos - SP (BR)
(74) Representative: Liesegang, Eva

(56) References cited:
- EP-A2- 2 292 709
- DE-A1-102009 047 671
- US-A1- 2004 028 894
- US-A1- 2010 068 464

## Description

The present invention refers to a method for joining components through mechanical adhesion without the use of inserts and without modifying the mechanical properties of the components to be joined. It also refers to a mechanical adhesion joint for joining components formed by this method, this joint being applied on the surface of the components without damaging or altering the mechanical properties and the structural characteristics of these components.

### Description of the state of the art

Different forms of joining or bonding two components or parts are known in the state of the art, namely: chemical bonding, electrostatics, interdiffusion, mechanical adhesion, collage, various encasements, by means of fixing elements, etc.

However, many of these require specific machining, holes or modifications in the structures or surfaces of the components and for certain cases this interference is not possible or desirable, especially in joining parts made of composite or thermoplastic materials whose mechanical structures undergo profound alterations when subjected to fusion, heating or reaction to certain chemical products.

In this sense, one solution found consists of positioning inserts between the parts to be bonded so that they anchor the parts. In the same way, there are situations in which the placement of these inserts is not possible or desirable by virtue of the construction material of the parts to be bonded, the precision of the joint which requires an intact surface or other design demands.

As an example we may cite document US 2009/0190997 which describes a joint for bonding a metallic part to a part made of composite material with reinforcement that is inserted between composite material laminates. In this joint, a metallic part is bonded to a composite part in an engagement region of varied size depending on the structural forces to which the parts will be subjected. Multiple attachment projections are disposed projecting from the metallic part inwardly of the composite part, these attachment projections are made of the same metallic material as the metallic part or another different metal, but always a metallic material. The distribution of the attachment projections is not uniform along the engagement region, the largest concentration being in the portions in which the tension between the composite material laminates is greater, generally near the ends of the engagement region. Accordingly, for joining parts made of composite material to metallic parts, this document from the state of the art teaches the insertion of metallic projections which are fastened on the metallic part and inserted into the composite part in order to anchor or join these two parts, the regions in which this bond will undergo greatest tension being privileged with a larger number of metallic projections. Therefore, it is necessary to study the tensions and forces to which these parts will be subjected before joining them. Nothing is taught in this document about the joining of two or more parts made of composite, with the presence of metallic parts or components. Additionally, it is necessary for the metallic projections to be formed on the metallic part so that anchorage occurs, that is, the metallic projections serve as metallic inserts for joining the parts.

Document US 2010/0068464 describes a method for preparing a metallic component to be bonded to another composite or thermoplastic material component, this method comprises the formation or insertion of projections into a bond region of the component such that these projections are inserted into the material of the other component to be bonded. This method can be applied for joining components of an aircraft. More specifically, this document describes the disposition of projections on a bonding area formed on a metallic insert. This insert is inserted into the part to be bonded and its projections penetrate the second part to be bonded. In another embodiment, the web of projects is done using laser sintering which melts the metallic powder bed of the surface of the component in the desired matrix forming line by line of the projections. These projections can also be done one by one using the laser sintering method and, moreover, can be done by laser sintering on the two sides of a metallic plate which will serve as bonding insert of the two components desired. Besides requiring much time to form the projections, the use of laser sintering significantly increases the costs of this method of joining parts or components.

Document WO 2004/028731 refers to a method to modify the structure of a workpiece. In this case, a workpiece, made of steel, receives electron beams so that the surface material melts and hardens again forming small projections on the surface of the workpiece. The size of these projections depends on the quantity of beams inserted into the same region of the workpiece and these projections, made of the very material of the surface of the part made of steel, act as anchorage or bonding element which is inserted into the layers of the composite material which will be bonded to this workpiece. Although it creates projections capable of safely bonding a part made of steel to another made of composite material, modifying the surface of the workpiece, that is, of the part made of steel is not always possible and desirable, since its mechanical properties are also modified.

Accordingly, the technologies and procedures already known in the state of the art mostly use metallic inserts in the parts to be bonded, which requires care in terms of the dif ference of thermal expansion/contraction during the use and oxidation, thus being limited to using parts with galvanic similarities.

There is also a technique known as "Co-bonding" in which a part, generally made of composite, is disposed on another part also made of composite and subjected to the curing process. By curing, the resin of one part bonds to the other part, whereby chemical bonding occurs. Controlling this chemical adhesion, however, is rather complex. There is oftentimes the need to add a light layer of a specific material (polyester with epoxy, for example) on the surface of one of the parts to render it slightly wrinkled (lightly texturized) and thereby improving the anchorage of the parts through this texturization. In this case, it may also be necessary to complement the bonding by inserting rivets to guarantee fastening.
DE 10 2009 047 671 A1 describes a method for connecting a composite component to a structural component of an aircraft. A metal film is provided as a reinforcing transverse element between the composite component and the structural component. At least one anchoring portion is formed which protrudes from the surface of the metal film and is inserted between the composite component and the structural component.

### Objectives of the invention

The objective of the present invention is to provide a method for joining components through mechanical adhesion without the use of inserts and without modifying the mechanical properties of the components to be joined.

It is also an objective of this invention to provide a mechanical adhesion joint for joining components, this joint being applied on the surface of the components without damaging or altering the mechanical properties and structural characteristics of these components.

### Brief description of the invention

The invention relates to a method for joining components through mechanical adhesion with the features of claim 1.

The method further relates to a mechanical adhesion joint according to independent claims 3.

### Brief description of the drawings

The present invention will now be described in greater detail based on an example of execution represented in the drawings. The drawings show:
Figures 1A to IF - illustrate the stages of the method for joining components through mechanical adhesion, which is the object of this invention;
Figures 2A to 2C - illustrate a first and second arrangements of the mechanical adhesion joint for joining components, which is the object of the present invention; and
Figures 3A and 3B - illustrate a third arrangement of the mechanical adhesion joint for joining components, which is the object of the present invention.

### Detailed description of the drawings

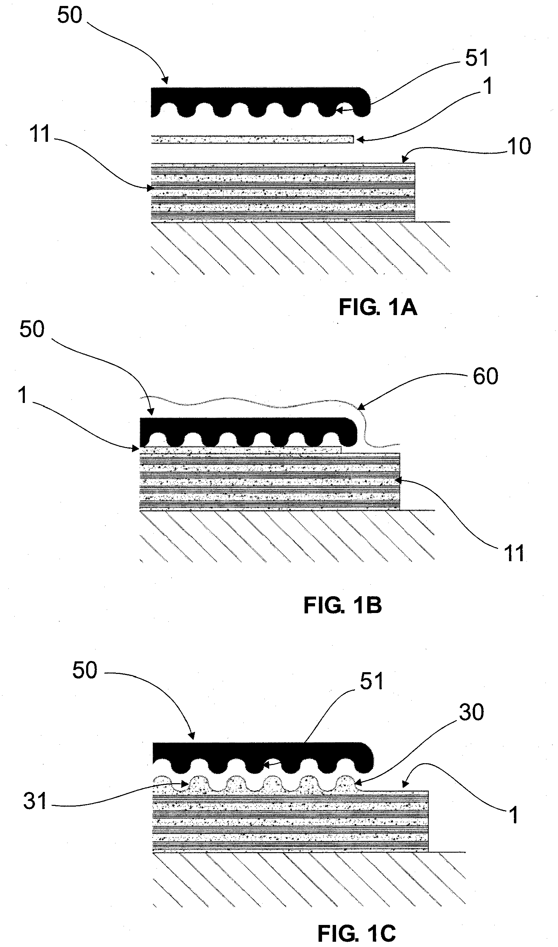

According to a preferred embodiment and as can be seen in figures 1A to IF, the present invention refers to a method for joining components through mechanical adhesion. This method comprises the stages of:
a) curing a resin laminate 1 on a surface 10 of a first component 11 imprinting a texture portion 30 upon the resin laminate 1;
b) positioning an adhesive material laminate 2 on the texture portion 30;
c) positioning a second component 12 on the adhesive material laminate 2; and
d) curing the adhesive material laminate 2 and penetration of the adhesive material laminate 2 into the texture portion 30.

As can be seen in figure 1A, the method begins before the first curing stage, with the positioning of the resin laminate 1 on the surface 10 of the first component 11. This first component 11 consists of any part made of composite, thermoplastic, polymeric or metallic material. In this preferred arrangement of the method, the first component 11 is made of composite material.

The resin laminate 1 will cover a certain portion of the surface 10 of this first component 11, in accordance with the desirably safe and satisfactory bonding of the components involved.

After the disposition of the resin laminate 1 surface 10 of this first component 11, a texturized mold 50 is positioned on this resin laminate 1. This texturized mold 50 comprises profiles 51 which will be imprinted upon the resin laminate 1.

Once the texturized mold 50 is positioned, the first curing stage is carried out using a vacuum bag 60 which encompasses the texturized mold 50 positioned on the resin laminate 1 and the first component 11 which received the resin laminate 1, as can be seen in figure 1 B. Vacuum bag curing 60 uses known temperature and pressure parameters known by a person skilled in the art. The vacuum bag curing method is also already known by a person skilled in the art.

At the end of the first curing stage, the texturized mold 50 is withdrawn and the texture portion 30 is imprinted upon the resin laminate 1 based on the profiles 51 of the texturized mold 50, that is, the texture portion 30 imprinted upon the resin laminate 1 will present a locking profile 31 identical to the profile 51 of the texturized mold 50 used, as illustrated in figure 1C. It is thus possible to imprint upon the resin laminate 1 the types of locking profile 31 of interest, provided there are texturized molds 50 prepared with said specific profiles of interest.

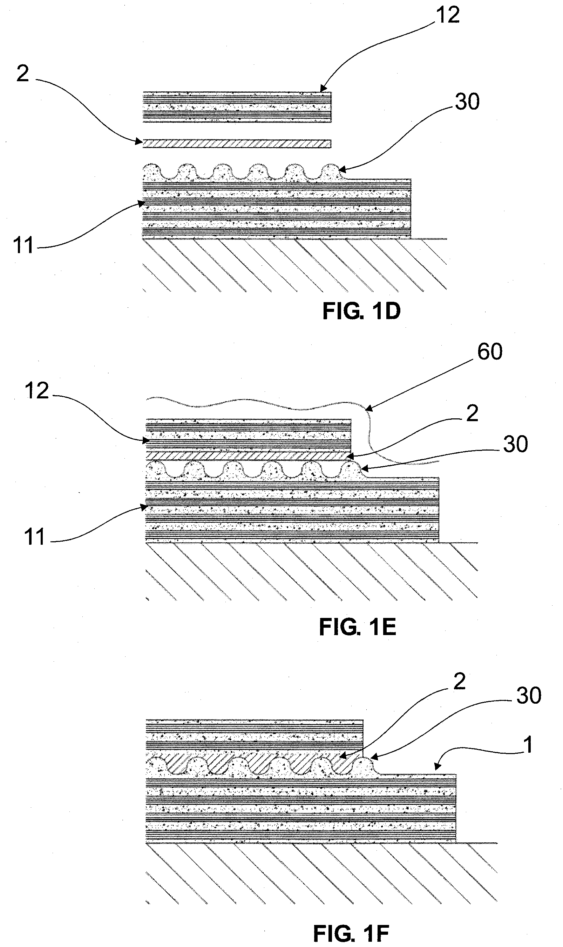

Next, as illustrated in figure 1 D, there occurs the stage of positioning an adhesive material laminate 2 on the texture portion 30 formed on the resin laminate 1 after the first curing stage and the positioning of a second component 12 on the adhesive material laminate 2. Optionally, the adhesive material laminate 2 and the second component 12 are previously bonded and disposed jointly on the texture portion 30.

The adhesive material laminate 2 and the second component 12 not yet cured are disposed on the texture portion 30 on the first component 11, both already cured.

Thus, a second curing stage also occurs by way of the vacuum bag 60, this time encompassing the adhesive material laminate 2, the second component 12, not yet cured, the resin laminate 1 with the texture portion 30 and the first component 11 already cured, as illustrated in figure 1 E. In this case vacuum bag curing 60 uses temperature and pressure parameters known by a person skilled in the art and the vacuum bag curing method is also already known by a person skilled in the art.

At the end of the second curing stage, figure 1 F, there occurs penetration of the adhesive material laminate 2 into the texture portion 30 of the resin laminate 1, that is, the adhesive film 2 permeates the wrinkles or profiles 31 formed on the texture portion 30, keeping the first component 11 bonded to the second component 12 in a reliable and satisfactory manner.

The present invention also refers to a mechanical adhesion joint 20 for joining components, formed according to the method for joining components through mechanical adhesion described above.

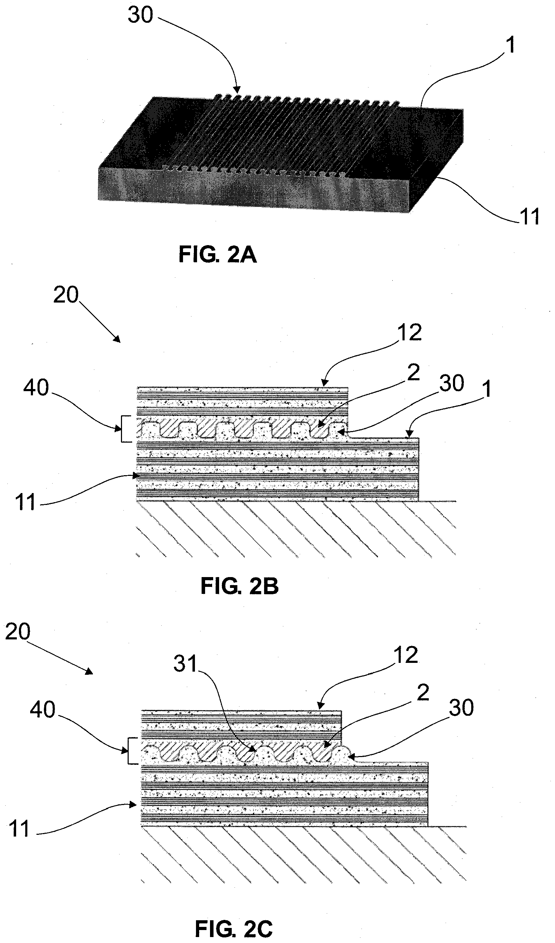

As illustrated in figures 2A to 2C, on the first component 11 there is formed the texture portion 30 which was imprinted upon a resin laminate 1. This texture portion 30 consists of a plurality of highlighted locking profiles 31, forming a locking texture. In this first and second arrangement of the joint 20, the locking profiles 31 are disposed in lines forming the texture portion 30. The format of the locking profiles 31 varies according to the texturized mold 50 used in the method, as already described above.

Accordingly, the joint 20 comprises an anchorage 40 which consists of the adhesive material laminate 2 disposed on the second component 12 permeated on the texture portion 30 disposed on the first component 11.

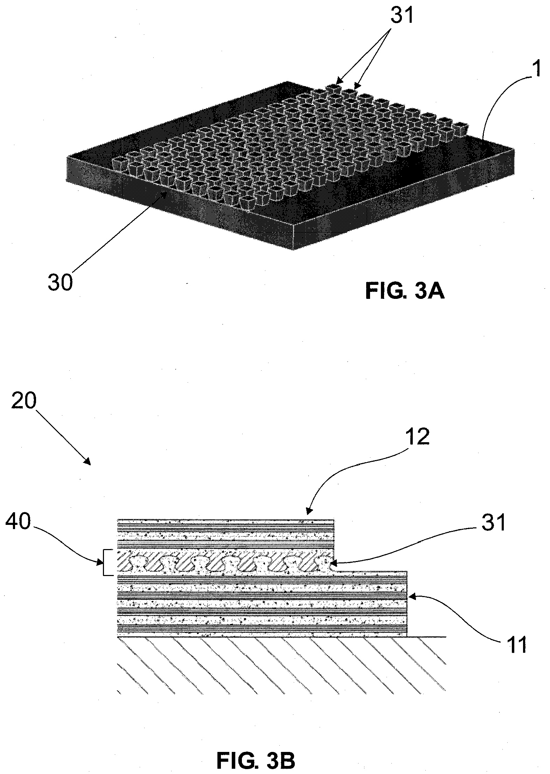

This anchorage 40 of the joint 20 is primarily responsible for bonding the first component 11 with the second component 12, although there is also the chemical gluing of the adhesive material laminate 2 on the resin laminate 1. The anchorage 40 of the joint 20 is primarily responsible for bonding the first component 11 with the second component 12 because, as illustrated in figures 3A and 3B, the format of the locking profiles 31 of the texture portion 30 means that after penetration of the adhesive material laminate 2 in the locking portion 30, there is formed a mechanical lock resistant to traction forces (vertically) when attempting to separate the components 11, 12, and resistant to shearing, when horizontal forces are applied to the bonded components 11 and 12.

This joint 20, formed according to the method described above, can be applied when the first component 11 and the second component 12 are made of composite material, when the first component 11 and the second component 12 are made of thermoplastic material and when the first component 11 and the second component 12 are made of polymer.

Additionally, the joint 20 may also be used if one of the components 11, 12 are made of composite material and the other component 11, 12 made of thermoplastic material, when one of the components 11, 12 is made of composite material and the other component 11, 12 is made of polymer material, when one of the components 11, 12 is made of thermoplastic material and the other component 11, 12 is made of polymer material and when one of the components 11, 12 is made of metallic material and the other component 11, 12 is made of composite material.

Accordingly, the method for joining components through mechanical adhesion and the mechanical adhesion joint for joining components that are the objects of this invention present a series of advantages over the methods and forms of joining parts already known in the state of the art, particularly the use of low-cost texturized molds, the fast and practical way to form the texture portion 30 on the first component 11, to increase the interface area for the chemical gluing which assists the mechanical anchorage 40, to resist traction and shearing forces and to define the geometries of the locking profiles 31 of the texture portion 30 in accordance with the need and request for loads to which the joint 20 will be subjected.

It should be emphasized that the joint 20 is fundamentally mechanical, but can be used in combination with other types of joints such as, for example, chemical bonding, by electrostatic attraction, interdiffusion, among others.

Having described an example of a preferred embodiment, it should be understood that the scope of the present invention encompasses other possible variations, being limited only by the content of the accompanying claims.

## Claims

1. A method for joining components through mechanical adhesion comprising the following stages:
a) curing a resin laminate (1) on a surface (10) of a first component (11) by way of a vacuum bag (60) encompassing a texturized mold (50) positioned on the resin laminate (1) and the first component (11), imprinting a texture portion (30) on the resin laminate (1);
b) positioning an adhesive material laminate (2) on the texture portion (30);
c) positioning a second component (12) on the adhesive material laminate (2); and
d) curing the adhesive material laminate (2) by way of a vacuum bag (60) encompassing the adhesive material laminate (2), the second component (12) not yet cured, the resin laminate (1) with the texture portion (30) and the first component (11), penetrating the adhesive material laminate (2) into the texture portion (30);
the texture portion (30) comprising a locking profile (31).

2. The method according to claim 1, wherein an adhesive material laminate (2) and the second component (12) are previously bonded and disposed jointly on the texture portion (30).

3. A mechanical adhesion joint (20) for joining components comprising an anchorage (40) formed by a texture portion (30), wherein the texture portion (30) is imprinted on a resin laminate (1) that is cured on a surface (10) of a first component (11) and permeated by a laminate (2) disposed on a second component (12);
the texture portion (30) comprising a locking profile (31).

4. The mechanical adhesion joint (20) for joining components according to claim 3, being formed in accordance with the method for joining components through mechanical adhesion defined in claim 1 or 2.

## Patentansprüche

1. Verfahren zum Verbinden von Komponenten durch mechanische Haftung mit den folgenden Schritten:
(a) Ausheilen eines Kunstharz-Laminats (1) auf einer Oberfläche (10) einer ersten Komponenten (11) mittels eines Vakuumsackes (60), welcher eine auf dem Kunstharz-Laminat (1) angeordnete texturierte Form (50) und die erste Komponente (11) beinhaltet, und Aufdrucken eines Texturabschnitts (30) auf das Kunstharz-Laminat (1);
(b) Anordnen eines haftenden Material-Laminats (2) auf dem Texturabschnitts (30);
(c) Anordnen einer zweiten Komponente (12) auf dem haftenden Material-Laminat (2); und
(d) Ausheilen des haftenden Material-Laminats (2) mittels eines Vakuumsacks (60) welcher das haftenden Material-Laminat (2) die zweite, noch nicht ausgeheilte Komponente (12), das Kunstharz-Laminat (1) mit dem Texturabschnitt (30) und die erste Komponente (11) beinhaltet, und Einbringen des haftenden Material-Laminats (2) in den Texturabschnitt (30);
wobei der Texturabschnitt (30) ein Klemmprofil umfasst.

2. Verfahren nach Anspruch 1, bei welchem das haftenden Material-Laminat (2) und die zweite Komponente (12) vorher verbunden sind und gemeinsam auf den Texturabschnitt (30) aufgebracht werden.

3. Mechanische Haftverbindung (20) zum Verbinden von Komponenten, umfassend eine Verankerung (40), welche mittels eines Texturabschnitts (30) ausgebildet ist, wobei der Texturabschnitt (30) auf ein Kunstharz-Laminat (1) aufgeprägt ist, wobei das Kunstharz-Laminat (1) auf einer Oberfläche (10) einer ersten Komponente (11) ausgehärtet ist, und wobei in den Texturabschnitt (30) ein Laminat (2), welches auf einer zweiten Komponente (12) angeordnet ist, eingebracht ist;
wobei der Texturabschnitt (30) ein Klemmprofil (31) umfasst.

4. Mechanische Haftverbindung (20) zum Verbinden von Komponenten nach Anspruch 3, welche gemäß des Verfahrens zum Verbinden von Komponenten durch mechanische Haftung gemäß Anspruch 1 oder 2 ausgebildet ist.

## Revendications

1. Procédé pour joindre des composants par adhérence mécanique comprenant les étapes suivantes :
a) la cuisson d'une couche de résine (1) sur une surface (10) d'un premier composant (11) au moyen d'un sac sous vide (60) englobant un moule texturé (50) positionné sur la couche de résine (1) et le premier composant (11), imprimant une partie de texture (30) sur la couche de résine (1) ;
b) le positionnement d'une couche de matériau adhésif (2) sur la partie de texture (30) ;
c) le positionnement d'un deuxième composant (12) sur la couche de matériau adhésif (2) ; et
d) la cuisson de la couche de matériau adhésif (2) au moyen d'un sac sous vide (60) englobant la couche de matériau adhésif (2), le deuxième composant (12) qui n'est pas encore cuit, la couche de résine (1) avec la partie de texture (30) et le premier composant (11), faisant pénétrer la couche de matériau adhésif (2) dans la partie de texture (30) ;
la partie de texture (30) comprenant un profil de blocage (31).

2. Procédé selon la revendication 1, dans lequel une couche de matériau adhésif (2) et le deuxième composant (12) sont liés au préalable et disposés conjointement sur la partie de texture (30).

3. Jonction par adhérence mécanique (20) pour joindre des composants comprenant un ancrage (40) formé par une partie de texture (30), dans laquelle la partie de texture (30) est imprimée sur une couche de résine (1) qui est cuite sur une surface (10) d'un premier composant (11) et infiltrée par une couche (2) disposée sur un deuxième composant (12) ;
la partie de texture (30) comprenant un profil de blocage (31).

4. Jonction par adhérence mécanique (20) pour joindre des composants selon la revendication 3, qui est formée conformément au procédé pour joindre des composants par adhérence mécanique selon la revendication 1 ou 2.
